# FASCICULE DE BREVET EUROPEEN

(11) **EP 2 892 010 B1**
(45) Date de publication et mention de la délivrance du brevet: **03.08.2016**
(21) Numéro de dépôt: 14200487.8
(22) Date de dépôt: 29.12.2014
(51) Int. Cl.: G06F 21/86, G06F 21/55

(54) **Dispositif de protection contre l'intrusion pour composant électronique**
Schutzvorrichtung gegen Eindringen für elektronische Komponente
Device for protection against intrusion for electronic component

(30) Priorité: 06.01.2014 FR 1450044
(43) Date de publication de la demande: 08.07.2015
(73) Titulaire: OBERTHUR TECHNOLOGIES, 92700 Colombes (FR)
(72) Inventeur: Bousquet, Nicolas, 92700 COLOMBES (FR); Giraud, Christophe, 92700 COLOMBES (FR); Morin, Nicolas, 92700 COLOMBES (FR)
(74) Mandataire: Delumeau, François Guy

(56) Documents cités:
- EP-A1- 2 549 404
- WO-A1-2011/032829
- DE-A1-102012 020 933
- US-A1- 2005 039 040

## Description

La présente invention concerne le domaine de la protection d'un composant électronique contre l'intrusion.

Parce qu'il assure une fonction critique, telle que, par exemple, la mémorisation et/ou le contrôle d'accès à une donnée confidentielle, un composant électronique est potentiellement la cible de tentatives d'intrusion. Le but d'une intrusion est de pouvoir accéder au plus près du dit composant électronique, afin de pouvoir espionner son comportement et/ou son contenu, par contact physique et/ou électrique ou simplement en étant à proximité, par induction, ou encore modifier ledit comportement par exemple au moyen d'une attaque par impulsion (EMFA).

Une telle intrusion pouvant être très préjudiciable, en fonction de la criticité du composant électronique, il convient de protéger le composant électronique contre une telle tentative d'intrusion. Une telle protection comprend une première étape de détection d'une telle tentative d'intrusion, éventuellement suivie d'au moins une action conservatoire.

Afin de détecter une telle tentative d'intrusion de nombreux moyens mécaniques ou électriques ont été proposés.

Le document US 2005/039040 décrit un système et un procédé pour détecter et répondre à une attaque d'un dispositif électronique.

Le document WO 2011/032829 décrit un système anti-intrusion pour protéger un composant électronique.

Le document EP 2 549 041 décrit un système de sécurisation des données à protéger d'un équipement.

La présente invention présente une nouvelle approche de détection d'une tentative d'intrusion, plus particulièrement adaptée à des composants électroniques disposés dans une enceinte de protection étanche à un type de rayonnement, par exemple un rayonnement électromagnétique.

L'invention a pour objet un dispositif de protection contre l'intrusion, pour protéger au moins un composant électronique, le dispositif comprenant une première enceinte enveloppant le composant électronique et étanche à un type de rayonnement, au moins un équipement parmi un récepteur ou un émetteur d'un rayonnement dudit type, disposé à l'intérieur de la première enceinte, sensiblement accordé avec un autre équipement complémentaire parmi un récepteur ou un émetteur, disposé à l'extérieur de la première enceinte, un moyen de détection apte à détecter une intrusion si au moins un récepteur reçoit un rayonnement dudit type.

Selon une autre caractéristique, le type dudit rayonnement comprend au moins un parmi lumineux, radiofréquence ou ultrason.

Selon une autre caractéristique, la première enceinte comprend une première boîte fermée au dit rayonnement sur tous ses côtés sauf une face restante, ladite face restante étant fermée au dit rayonnement par un support plan.

Selon une autre caractéristique, le rayonnement est radiofréquence et le support comprend un plan de masse au même potentiel que la première boîte.

Selon une autre caractéristique, l'équipement disposé à l'extérieur de la première enceinte, est disposé à l'intérieur d'une deuxième enceinte, comprenant une deuxième boîte solidaire de la première boîte.

Selon une autre caractéristique, la première boite et/ou la deuxième boîte est un moyen de protection contre les rayonnements électromagnétiques.

Selon une autre caractéristique, l'équipement disposé à l'intérieur de la première enceinte est un récepteur, sensiblement accordé avec un émetteur préexistant dans l'environnement du composant électronique, à l'extérieur de la première enceinte.

Selon une autre caractéristique, le moyen de détection est apte à détecter une intrusion de type pénétration si au moins un récepteur reçoit un rayonnement d'amplitude supérieure à un premier seuil de bruit.

Selon une autre caractéristique, le moyen de détection est apte à détecter une intrusion de type pénétration si au moins un récepteur reçoit un rayonnement d'amplitude inférieure à l'amplitude d'un signal radiofréquence émis par un émetteur.

Selon une autre caractéristique, le moyen de détection est apte à détecter une intrusion de type attaque impulsionnelle si au moins un récepteur reçoit un rayonnement d'amplitude supérieure à l'amplitude d'un rayonnement émis par un émetteur.

Selon une autre caractéristique, le dispositif comprend encore un moyen d'action, apte à prendre une première mesure conservatoire si une intrusion de type pénétration est détectée.

Selon une autre caractéristique, le moyen d'action est encore apte à prendre une deuxième mesure conservatoire si une intrusion de type attaque électromagnétique est détectée.

L'invention concerne encore un équipement électronique comprenant un tel dispositif de protection contre l'intrusion.

Selon une autre caractéristique, l'équipement électronique est un terminal mobile.

D'autres caractéristiques, détails et avantages de l'invention ressortiront plus clairement de la description détaillée donnée ci-après à titre indicatif en relation avec des dessins sur lesquels :
- les figures 1, 2, 4 et 5 présentent, en vue de dessus, différents modes de réalisation de l'invention,
- la figure 3 présente, en vue de profil coupée, un mode de réalisation de l'invention,
- la figure 6 illustre un rayonnement reçu par un récepteur.

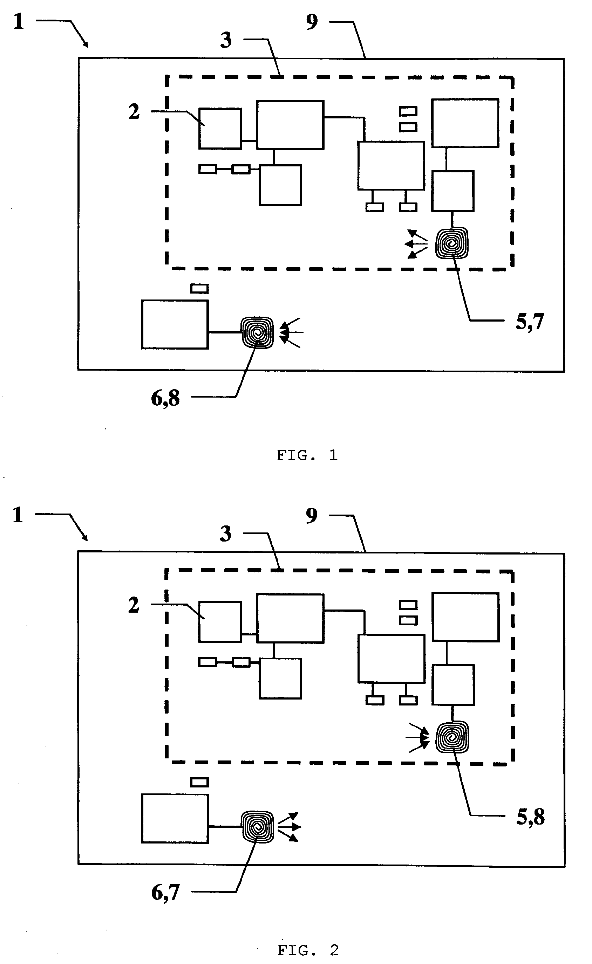

La figure 1, présente un environnement typique de l'invention. Selon le mode de réalisation illustré, un dispositif de protection 1 est apte à protéger au moins un composant électronique 2 contre une intrusion.

Un composant électronique assurant une fonction critique, telle que, par exemple, la mémorisation et/ou le contrôle d'accès à une donnée confidentielle est potentiellement la cible de tentatives d'intrusion. Un tel composant électronique peut être, par exemple, un processeur réalisant des opérations sécurisées, tel un processeur de type TEE. Il peut encore s'agir d'une mémoire, volatile ou non, gardant en mémoire un code sensible, tel un programme cryptographique, ou une donnée sensible, telle une clé cryptographique, un code PIN, etc.

Pour cela, le dit au moins un composant électronique 2 est disposé dans une enceinte 3 étanche à au moins un type de rayonnement. Ladite enceinte 3 enveloppe ledit au moins un composant électronique 2. Le principe du dispositif de protection 1 est de placer au moins un équipement 5, émetteur ou récepteur, à l'intérieur de l'enceinte 3 et de placer au moins un autre équipement 6, récepteur ou émetteur, à l'extérieur de l'enceinte 3, le premier équipement 5 et le deuxième équipement 6 étant complémentaires et sensiblement accordés entre eux. Ainsi, tel qu'illustré à la figure 1, si le premier équipement 5 est un émetteur 7, le deuxième équipement 6 est un récepteur 8 sensiblement accordé, en ce qu'il est apte à recevoir un rayonnement 11 émis par le premier équipement 5. De manière duale mais équivalente, tel qu'illustré à la figure 2, si le deuxième équipement 6 est un émetteur 7, le premier équipement 5 est un récepteur 8 sensiblement accordé en ce qu'il est apte à recevoir un rayonnement 11 émis par le deuxième équipement radiofréquence 6. Ledit rayonnement est avantageusement structuré en un signal. Un récepteur est dit accordé en ce qu'il est apte à recevoir ledit rayonnement et à en extraire, le cas échéant le signal. Dans tous les cas au moins un émetteur 7 et au moins un récepteur 8 complémentaire sont disposés de part et d'autre de l'enceinte 3. Il s'ensuit qu'il est possible de détecter deux cas différents. Si l'enceinte 3 est fermée, que toutes ses parties sont intactes et en place, le récepteur 8 n'est pas en mesure de recevoir le rayonnement émis par l'émetteur 7. Au contraire, si l'enceinte 3 est ouverte, parce qu'au moins une de ses parties est retirée ou endommagée, le récepteur 8 est alors en mesure de recevoir le rayonnement émis par l'émetteur 7. L'analyse du rayonnement 11 reçu permet ainsi une détection de la fermeture, de la présence et de l'intégrité de l'enceinte 3. Sur ce principe un moyen de détection capable d'analyser le rayonnement 11 reçu par un récepteur 8 peut ainsi être construit et est apte à détecter une intrusion dès qu'un rayonnement 11 significatif est reçu.

Ledit rayonnement peut être de tout type, apte à être transmis sans contact entre un émetteur et un récepteur. Le type peut être, par exemple, lumineux, radiofréquence, ou encore ultrason.

Selon un mode de réalisation classique le composant électronique 2 est disposé sur un support 9, typiquement un circuit imprimé 9, sensiblement plan. L'enceinte 3 qui enveloppe totalement ledit au moins un composant électronique 2 comprend avantageusement, selon un mode de réalisation, une boîte 31, de forme quelconque, fermée sur tous ses côtés sauf une face restante. La face restante est une face sensiblement plane et correspond au support 9. Il est alors possible de disposer la boite 31, sa face ouverte plaquée contre le support 9. Ainsi la boite 31 enveloppe le composant électronique 2 et sa face restante est fermée par le support 9.

Pour réaliser le principe précédemment décrit, il convient que l'enceinte 3 soit fermée au dit rayonnement, afin d'être étanche à ce rayonnement. Cette fermeture, au sens rayonnement, dépend du type de rayonnement.

Ainsi pour un rayonnement optique la fermeture est une opacité à la lumière employée.

Pour un rayonnement radiofréquence, cela suppose que l'enceinte 3 comprenne une enveloppe métallique continue ou au moins un treillis selon une maille adaptée aux fréquences contenues dans le signal radiofréquence 11. Pour cela, la boite 31 est métallique. Alternativement, la boite 31 peut être en un matériau isolant métallisé. La continuité métallique au sein du support 9 est avantageusement réalisée par un plan de masse 32 couvrant au moins toute la surface d'empreinte de la boite 31. Avantageusement la boite 31 et ledit plan de masse 32 sont électriquement connectés entre eux afin d'être au même potentiel électrique. Ainsi l'enceinte 3 est formée par la boîte 31 qui recouvre le composant électronique 2 par le haut et le plan de masse 32 disposé sous le composant électronique 2.

Il n'est ainsi pas possible de venir au contact du composant électronique 2 sans rencontrer l'enceinte 3.

Selon un mode de réalisation, la boite 31 peut comprendre un cadre 33, fixé au support 9, sur lequel vient s'engager un couvercle 34. Ainsi la boite 31 peut être ouverte pour accéder au composant électronique 2. Une telle ouverture est détectée par l'invention.

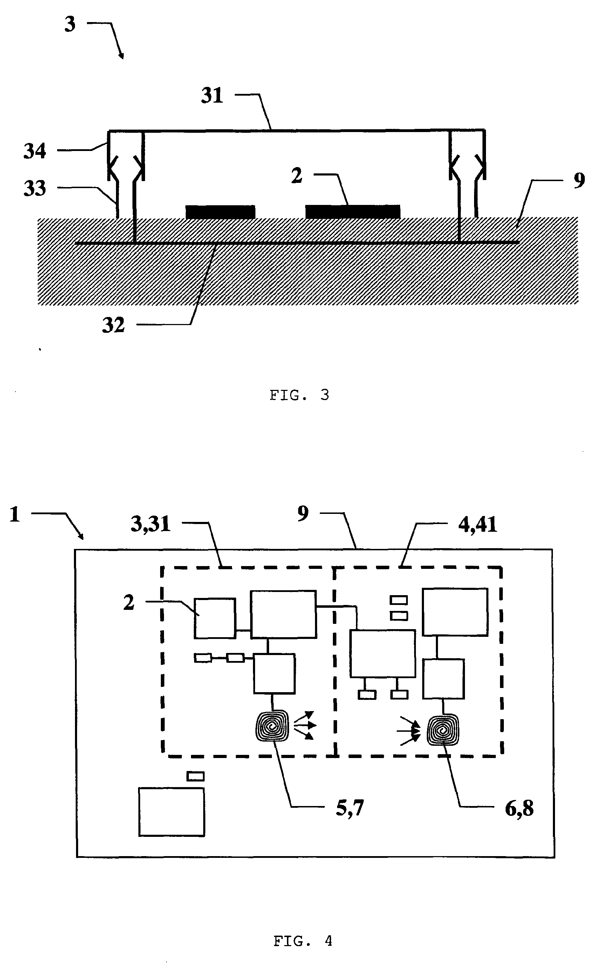

Il a été vu précédemment qu'un équipement 5, émetteur ou récepteur, est disposé à l'intérieur de l'enceinte 3 et que l'autre équipement 6, complémentaire, récepteur ou émetteur, est disposé à l'extérieur de l'enceinte 3 enveloppant le composant électronique 2. Selon un mode de réalisation, plus particulièrement illustré à la figure 4, l'équipement 6 disposé à l'extérieur de l'enceinte 3, que l'on nommera désormais la première enceinte 3, est disposé à l'intérieur d'une deuxième enceinte 4, disjointe de la première enceinte 3. Cette deuxième enceinte 4 comprend une deuxième boîte 41 solidaire de la première boîte 31. Les deux boîtes 31,41 enveloppent chacune des composants électroniques. Elles sont solidaires en ce qu'elles ne forment qu'un bloc unique. Ainsi l'ouverture, respectivement la fermeture, d'une des boîtes 31,41 est-elle nécessairement simultanée avec l'ouverture, respectivement la fermeture, de l'autre boîte 31,41.

Selon une caractéristique avantageuse de l'invention, dans le cas où le rayonnement est radiofréquence, une boîte 31,41 n'est pas réalisée spécifiquement pour l'invention, afin de réaliser un écran entre un premier et un deuxième équipement 5,6, mais réutilise avantageusement une boîte de protection contre les radiations électromagnétiques existante. Une telle boîte 31,41, métallique, est courante pour protéger les composants électroniques 2 des différentes ondes et radiations électromagnétiques présentes dans leur environnement, que ces ondes soient fonctionnelles et volontaires, liées à des fonctions radiofréquentielles, ou involontaires, liées à des perturbations électromagnétiques. Ainsi, par exemple, pour une carte électronique d'un terminal mobile, tel par exemple un téléphone cellulaire, certains composants électroniques sensibles doivent être protégés contre les différents équipements radio fréquentiels situés à proximité, tels que par exemple un émetteur GSM, Wifi ou encore Bluetooth. Une boîte métallique, combinée et reliée à un plan de masse est alors utilisée pour former une cage de Faraday enveloppant lesdits composants électroniques 2. Cette cage de Faraday, forme une enceinte 3 étanche aux rayonnements électromagnétiques et en même temps une protection physique contre l'accès au composant électronique 2 ainsi protégé. Cette double propriété est avantageusement mise à profit en réutilisant cette boîte 31 existante. Les au moins deux équipements, ici radio fréquentiels, 5,6 de l'invention permettant de détecter la présence et la non détérioration de l'écran étanche aux rayonnements électromagnétiques et ainsi la présence et la non détérioration de la protection physique, garantissant ainsi que le composant électronique n'est pas accessible.

La détection du retrait ou de l'endommagement de la protection physique, telle que proposée, est invisible et silencieuse. Aussi cette détection peut avantageusement être réalisée sans que le candidat intrus ou l'intrus n'en soit alerté et informé.

L'invention telle que décrite nécessite au moins un émetteur 7 et au moins un récepteur 8 accordé avec ledit émetteur 7. Il est cependant possible d'employer un nombre quelconque d'émetteur 7 et un nombre quelconque, éventuellement différent, de récepteur 8.

Si plusieurs émetteurs 7 et plusieurs récepteur 8 sont employés, il est encore possible, en différenciant suffisamment les fréquences et/ou modulations utilisées, de croiser les couples émetteur/récepteurs. Ainsi, par exemple, il est possible d'avoir à l'intérieur de l'enceinte 3 un émetteur 7 et un récepteur 8 non accordés entre eux, mais respectivement accordés avec un récepteur 8 et un émetteur 7 disposés à l'extérieur de l'enceinte 3.

Si l'environnement du composant électronique 2 le permet en ce qu'il comprend un émetteur 7 existant, cet émetteur 7 peut avantageusement être réutilisé par le dispositif 1 selon l'invention. Ainsi en supposant qu'au moins un émetteur 7 soit préexistant à l'extérieur de l'enceinte 3, le dispositif 1 selon l'invention peut être réalisé en ajoutant au moins un équipement 5 à l'intérieur de l'enceinte 3. Dans ce cas, ledit équipement 5 est nécessairement un récepteur 8, accordé avec ledit au moins un émetteur 7 préexistant.

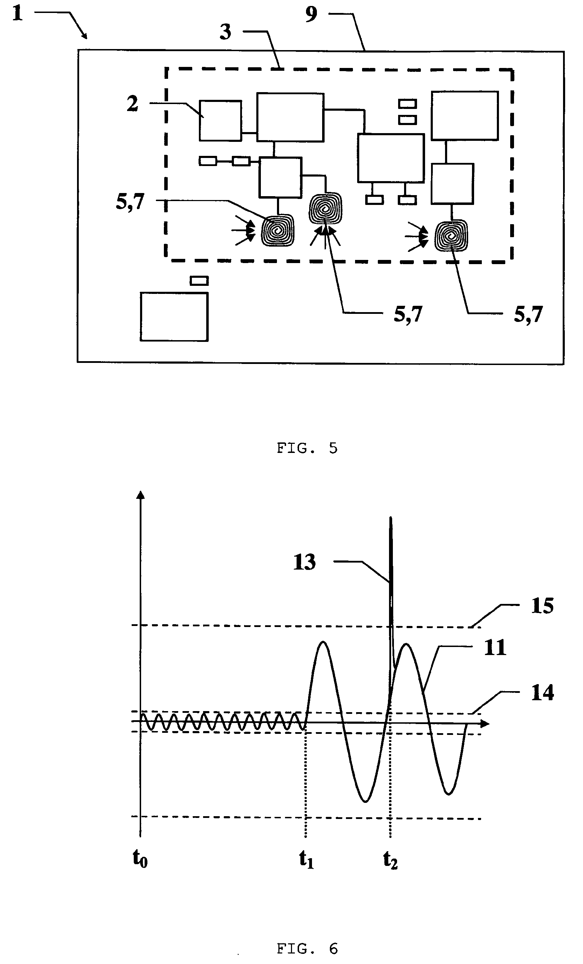

Ce cas se rencontre, par exemple, pour un composant électronique 2 situé sur une carte électronique d'un téléphone cellulaire. Plusieurs équipements, ici radiofréquence, émetteurs 7 peuvent être rencontrés. Ainsi dans un tel environnement il est possible de réutiliser un émetteur GSM, Wifi ou encore Bluetooth préexistant. Dans ce cas, le dispositif 1 selon l'invention ajoute un récepteur GSM, un récepteur Wifi ou un récepteur Bluetooth afin de détecter une intrusion. Alternativement le dispositif 1 selon l'invention peut ajouter en combinaison, deux ou trois parmi un récepteur GSM, un récepteur Wifi ou un récepteur Bluetooth. Ceci est plus particulièrement illustré par le mode de réalisation de la figure 5, où le dispositif 1 illustré ne comprend pas d'émetteur 7, en ce qu'il réutilise au moins un émetteur existant, mais comprend trois récepteurs 8, pouvant être accordés sur un même type d'émetteur ou sur trois types d'émetteurs différends.

La présence d'un émetteur radiofréquence existant conduit le plus souvent à protéger un composant électronique 2 sensible au moyen d'une boîte métallique. Aussi la présence conjointe d'un émetteur existant et d'une enceinte existante, aptes à pouvoir être réutilisés, correspond à un cas fréquent en pratique.

Il va maintenant, en référence à la figure 6, être décrit plus particulièrement le principe de la détection. Le moyen de détection du dispositif 1 analyse le rayonnement 11 reçu sur un des récepteurs 8. Un exemple illustratif d'un tel rayonnement 11 est illustré sur un diagramme temporel à la figure 6.

Dans une première phase, comprise entre l'instant t₀ et l'instant t₁, l'amplitude du rayonnement 11 reçu est faible et, à tout le moins, est inférieure en valeur absolue à un premier seuil 14. Ce premier seuil 14 est faible et sert à éliminer un éventuel bruit de réception. Au bruit près, il peut être considéré que le rayonnement 11 est nul et qu'aucun rayonnement ni signal n'est reçu qui soit issu de l'un des émetteurs 7 avec lesquels le récepteur 8 analysé est accordé. Il peut alors être conclu que l'enceinte 3 est fermée et qu'aucune intrusion n'est à déplorer.

A partir de l'instant t₁, l'amplitude du rayonnement 11 reçu augmente nettement pour devenir supérieure au premier seuil de bruit 14. Il est alors considéré que le rayonnement 11 reçu est significatif, et est un rayonnement11 réputé issu de l'un des émetteurs 7 avec lesquels le récepteur 8 analysé est accordé. Il peut alors être conclu que l'enceinte 3 est ouverte : retirée ou endommagée, et qu'une intrusion s'est produite.

Tant que l'amplitude du rayonnement11 reçu reste inférieure à un deuxième seuil 15, il peut raisonnablement être conclu que le rayonnement 11 reçu est un rayonnement issu de l'un des émetteurs 7 avec lesquels le récepteur 8 analysé est accordé. Afin qu'il soit pertinent, ce deuxième seuil 15 est déterminé de manière à correspondre à la plus grande amplitude du rayonnement émis par l'un des émetteurs 7 avec lesquels le récepteur 8 analysé est accordé, telle que vue par ledit récepteur 8. Ce deuxième seuil 15 est donc au plus égal à ladite plus grande amplitude. Il peut avantageusement être réduit en fonction des atténuations connues ou estimées.

Si au contraire, comme à l'instant t₂, l'amplitude du rayonnement 11 reçu devient supérieure au deuxième seuil 15, et présente par exemple un pic 13, il peut être conclu qu'un autre émetteur, non inclus normalement dans l'environnement du dispositif 1, est présent. De plus, si le récepteur 8 analysé est à l'intérieur de l'enceinte 3, une ouverture de l'enceinte 3 est à craindre.

Il apparait ainsi deux cas discriminables. Si l'amplitude du rayonnement 11 reçu est supérieure à un premier seuil 14 de bruit mais reste inférieure au deuxième seuil 15, il peut raisonnablement être conclu que l'enceinte 3 est ouverte. On parle dans ce cas d'une intrusion de type pénétration.

Si l'amplitude du rayonnement 11 reçu devient, même un court instant, supérieure au deuxième seuil 15, il peut raisonnablement être conclu qu'un émetteur extérieur est présent. Il peut être raisonnablement supposé que cet émetteur est un émetteur pirate utilisé pour réaliser une attaque par impulsion laser ou radiofréquence, encore désignée EMFA dans le cas radiofréquence, à l'encontre d'un composant électronique 2. On parle dans ce cas d'une intrusion de type attaque impulsionnelle. De plus, si le récepteur 8 analysé est à l'intérieur de l'enceinte 3, ceci révèle de plus une ouverture de l'enceinte 3.

Un dispositif de protection 1 peut se contenter d'une détection. Afin cependant de protéger le composant électronique 2 il convient au minimum de déclencher un moyen d'alerte apte à avertir de la survenue de l'intrusion. Cependant pour une meilleure efficacité, il est préférable que la détection soit suivie d'une action conservatoire, de préférence directement appliquée au composant électronique 2.

En fonction de la détection d'intrusion réalisée et de son type, le dispositif de protection 1 peut prendre une ou plusieurs mesures conservatoires afin de protéger effectivement le composant électronique 2. Pour cela le dispositif 1 comprend avantageusement en moyen d'action apte à mettre en oeuvre une ou plusieurs mesures conservatoires.

Ainsi un premier niveau de mesure conservatoire peut être réalisé si une intrusion de type pénétration est détectée. Une mesure conservatoire prise suite à une détection d'intrusion de type pénétration est préférentiellement réversible. Ceci permet de prendre en compte le cas d'une ouverture de l'enceinte 3 pour des raisons, autorisées, de maintenance. Ainsi une mesure conservatoire de premier niveau peut consister en une extinction du composant électronique 2, qui devient ainsi plus difficile à espionner.

Un deuxième niveau de mesure conservatoire peut être réalisé, avec pour but de renforcer encore la sécurité offerte, le cas échéant, par une mesure de premier niveau, si une intrusion de type attaque impulsionnelle est détectée. Dans ce cas la malveillance est nettement plus probable. Une mesure conservatoire définitive, irréversible peut alors être envisagée. Une mesure conservatoire de deuxième niveau peut consister en une destruction du composant électronique 2, ou encore en un effacement des données sensibles.

## Revendications

1. Dispositif de protection (1) contre l'intrusion, pour protéger au moins un composant électronique (2), le dispositif (1) comprenant une première enceinte (3) enveloppant le composant électronique (2) et étanche à au moins un type de rayonnement, ledit dispositif étant **caractérisé en ce qu'**il comporte au moins un équipement (5) parmi un récepteur (8) ou un émetteur (7) d'un rayonnement dudit type, disposé à l'intérieur de la première enceinte (3), sensiblement accordé avec un autre équipement (6) complémentaire parmi un récepteur ou un émetteur, disposé à l'extérieur de la première enceinte (3), un moyen de détection apte à détecter une intrusion si au moins un récepteur (8) reçoit un rayonnement (11) dudit type.

2. Dispositif (1) selon la revendication **1,** où le type dudit rayonnement comprend au moins un parmi lumineux, radiofréquence ou ultrason.

3. Dispositif (1) selon l'une quelconque des revendications **1** ou **2,** où la première enceinte (3) comprend une première boîte (31) fermée au dit rayonnement sur tous ses côtés sauf une face restante, ladite face restante étant fermée au dit rayonnement par un support (9) plan.

4. Dispositif (1) selon l'une quelconque des revendications **1** à **3,** où le rayonnement est radiofréquence et où le support (9) comprend un plan de masse (32) au même potentiel que la première boite (31).

5. Dispositif (1) selon l'une quelconque des revendications **1** à **4,** où l'équipement (6) disposé à l'extérieur de la première enceinte (3), est disposé à l'intérieur d'une deuxième enceinte (4), comprenant une deuxième boîte (41) solidaire de la première boîte (31).

6. Dispositif (1) selon l'une quelconque des revendications **2** ou **5,** où la première boite (31) et/ou la deuxième boîte (41) est un moyen de protection contre les rayonnements électromagnétiques.

7. Dispositif (1) selon l'une quelconque des revendications **1** à **6,** où l'équipement (5) disposé à l'intérieur de la première enceinte (3) est un récepteur (8), sensiblement accordé avec un émetteur (7) préexistant dans l'environnement du composant électronique (2), à l'extérieur de la première enceinte (3).

8. Dispositif (1) selon l'une quelconque des revendications **1** à **7,** où le moyen de détection est apte à détecter une intrusion de type pénétration si au moins un récepteur (8) reçoit un rayonnement (11) d'amplitude supérieure à un premier seuil (14) de bruit.

9. Dispositif (1) selon l'une quelconque des revendications **1** à **8,** où le moyen de détection est apte à détecter une intrusion de type pénétration si au moins un récepteur (8) reçoit un rayonnement (11) d'amplitude inférieure à l'amplitude d'un rayonnement émis par un émetteur (7).

10. Dispositif (1) selon l'une quelconque des revendications **1** à **9,** où le moyen de détection est apte à détecter une intrusion de type attaque impulsionnelle si au moins un récepteur (8) reçoit un rayonnement (11) d'amplitude supérieure à l'amplitude d'un rayonnement émis par un émetteur (7).

11. Dispositif (1) selon la revendication **10,** comprenant encore un moyen d'action, apte à prendre une première mesure conservatoire si une intrusion de type pénétration est détectée.

12. Dispositif selon la revendication **11,** où le moyen d'action est encore apte à prendre une deuxième mesure conservatoire si une intrusion de type attaque électromagnétique est détectée.

13. Equipement électronique comprenant un dispositif de protection (1) contre l'intrusion selon l'une quelconque des revendications précédentes.

14. Equipement électronique selon la revendication **13,** où l'équipement électronique est un terminal mobile.

## Patentansprüche

1. Vorrichtung zum Schutz (1) gegen Eindringen, um wenigstens ein elektronisches Bauteil (2) zu schützen, wobei die Vorrichtung (1) eine erste Umschließung (3), die das elektronische Bauteil (2) umschließt und gegenüber wenigstens einer Strahlungsart dicht ist, umfasst, wobei die Vorrichtung **dadurch gekennzeichnet ist, dass** sie wenigstens eine innerhalb der ersten Umschließung (3) angeordnete Einrichtung (5) aus einem Empfänger (8) oder einem Sender (7) einer Strahlung der genannten Art, die mit einer weiteren ergänzenden Einrichtung (6) aus einem Empfänger oder einem Sender, welche außerhalb der ersten Umschließung (3) angeordnet ist, im Wesentlichen abgestimmt ist, ein Erfassungsmittel, das geeignet ist, ein Eindringen zu erfassen, wenn wenigstens ein Empfänger (8) eine Strahlung (11) der genannten Art empfängt, umfasst.

2. Vorrichtung (1) nach Anspruch 1, wobei die Art der Strahlung wenigstens eine aus Licht, Radiofrequenz oder Ultraschall umfasst.

3. Vorrichtung (1) nach einem der Ansprüche 1 oder 2, wobei die erste Umschließung (3) ein erstes Gehäuse (31) umfasst, das auf all seinen Seiten, bis auf eine verbleibende Seite, für die Strahlung geschlossen ist, wobei die verbleibende Seite durch einen ebenen Träger (9) für die Strahlung geschlossen ist.

4. Vorrichtung (1) nach einem der Ansprüche 1 bis 3, wobei die Strahlung Radiofrequenz ist und wobei der Träger (9) eine Masseebene (32) mit dem gleichen Potential wie das erste Gehäuse (31) umfasst.

5. Vorrichtung (1) nach einem der Ansprüche 1 bis 4, wobei die Einrichtung (6), die außerhalb der ersten Umschließung (3) angeordnet ist, innerhalb einer zweiten Umschließung (4), welche ein mit dem ersten Gehäuse (31) fest verbundenes zweites Gehäuse (41) umfasst, angeordnet ist.

6. Vorrichtung (1) nach einem der Ansprüche 2 oder 5, wobei das erste Gehäuse (31) und/oder das zweite Gehäuse (41) ein Mittel zum Schutz gegen elektromagnetische Strahlungen ist.

7. Vorrichtung (1) nach einem der Ansprüche 1 bis 6, wobei die Einrichtung (5), die innerhalb der ersten Umschließung (3) angeordnet ist, ein Empfänger (8) ist, der mit einem in der Umgebung des elektronischen Bauteils (2) vorbestehenden Sender (7), außerhalb der ersten Umschließung (3), im Wesentlichen abgestimmt ist.

8. Vorrichtung (1) nach einem der Ansprüche 1 bis 7, wobei das Erfassungsmittel geeignet ist, ein Eindringen vom Typ Durchdringen zu erfassen, wenn wenigstens ein Empfänger (8) eine Strahlung (11) mit einer Amplitude oberhalb einer ersten Rauschschwelle (14) empfängt.

9. Vorrichtung (1) nach einem der Ansprüche 1 bis 8, wobei das Erfassungsmittel geeignet ist, ein Eindringen vom Typ Durchdringen zu erfassen, wenn wenigstens ein Empfänger (8) eine Strahlung (11) mit einer Amplitude, die kleiner als die Amplitude einer durch einen Sender (7) ausgesandten Strahlung ist, empfängt.

10. Vorrichtung (1) nach einem der Ansprüche 1 bis 9, wobei das Erfassungsmittel geeignet ist, ein Eindringen vom Typ Impulsangriff zu erfassen, wenn wenigstens ein Empfänger (8) eine Strahlung (11) mit einer Amplitude, die größer als die Amplitude einer durch einen Sender (7) ausgesandten Strahlung ist, empfängt.

11. Vorrichtung (1) nach Anspruch 10, die weiterhin ein Aktionsmittel umfasst, das geeignet ist, eine erste Sicherungsmaßnahme zu ergreifen, wenn ein Eindringen vom Typ Durchdringen erfasst wird.

12. Vorrichtung nach Anspruch 11, wobei das Aktionsmittel weiterhin geeignet ist, eine zweite Sicherungsmaßnahme zu ergreifen, wenn ein Eindringen vom Typ elektromagnetischer Angriff erfasst wird.

13. Elektronische Einrichtung, die eine Vorrichtung zum Schutz (1) gegen Eindringen nach einem der vorhergehenden Ansprüche umfasst.

14. Elektronische Einrichtung nach Anspruch 13, wobei die elektronische Einrichtung ein mobiles Endgerät ist.

## Claims

1. A device (1) for providing protection against intrusion in order to protect at least one electronic component (2), the device (1) comprising a first enclosure (3) surrounding the electronic component (2) and proof against at least one type of radiation, said device being **characterized in that** it comprises at least one piece of equipment (5) from a receiver (8) and a transmitter (7) of radiation of said type arranged inside the first enclosure (3), and substantially tuned to another piece of equipment (6) that is complementary and selected from a receiver and a transmitter arranged outside the first enclosure (3), and detection means suitable for detecting an intrusion if at least one receiver (8) receives radiation (11) of said type.

2. A device (1) according to claim 1, wherein the type of said radiation comprises at least one type selected from light radiation, radiofrequency radiation, and ultrasound radiation.

3. A device (1) according to claim 1 or claim 2, wherein the first enclosure (3) comprises a first box (31) that is closed to said radiation on all of its faces except for a remaining face, said remaining face being closed to said radiation by a plane support (9).

4. A device (1) according to any one of claims 1 to 3, wherein the radiation is radiofrequency radiation and wherein the support (9) comprises a ground plane (32) at the same potential as the first box (31).

5. A device (1) according to any one of claims 1 to 4, wherein the equipment (6) arranged outside the first enclosure (3) is itself arranged inside a second enclosure (4) that comprises a second box (41) secured to the first box (31).

6. A device (1) according to claim 2 or claim 5, wherein the first box (31) and/or the second box (41) constitutes means for providing protection against electromagnetic radiation.

7. A device (1) according to any one of claims 1 to 6, wherein the equipment (5) arranged inside the first enclosure (3) is a receiver (8) that is substantially tuned to a preexisting transmitter (7) in the environment of the electronic component (2) and outside the first enclosure (3).

8. A device (1) according to any one of claims 1 to 7, wherein the detection means are suitable for detecting an intrusion of penetration type if at least one receiver (8) receives radiation (11) of amplitude greater than a first threshold (14) for noise.

9. A device (1) according to any one of claims 1 to 8, wherein the detection means are suitable for detecting an intrusion of penetration type if at least one receiver (8) receives radiation (11) of amplitude less than the amplitude of radiation transmitted by a transmitter (7).

10. A device (1) according to any one of claims 1 to 9, wherein the detection means are suitable for detecting an intrusion of pulse attack type if at least one receiver (8) receives radiation (11) of amplitude greater than the amplitude of radiation transmitted by a transmitter (7).

11. A device (1) according to claim 10, further including action means, suitable for taking a first conservation measure if an intrusion of penetration type is detected.

12. A device according to claim 11, wherein the action means are also suitable for taking a second conservation measure if an intrusion of electromagnetic attack type is detected.

13. Electronic equipment including a device (1) for providing protection against intrusion according to any preceding claim.

14. Electronic equipment according to claim 13, wherein the electronic equipment is a mobile terminal.
